Europäisches Patentamt

European Patent Office

Office européen des brevets

(11) Veröffentlichungsnummer: **0 215 962**
**A1**

# (12) EUROPÄISCHE PATENTANMELDUNG

(21) Anmeldenummer: 85111321.7

(22) Anmeldetag: 07.09.85

(51) Int. Cl.⁴: **F16D 27/10** , F16D 27/06 , F16D 59/02 , F16D 63/00

(43) Veröffentlichungstag der Anmeldung:
01.04.87 Patentblatt 87/14

(84) Benannte Vertragsstaaten:
CH DE FR GB IT LI

(71) Anmelder: K. Ernst Brinkmann
Industrieverwaltung
Försterweg 38
D-4924 Barntrup(DE)

(72) Erfinder: Brinkmann, Karl-Ernst
Ahornweg 1
D-4924 Barntrup(DE)

(74) Vertreter: Stracke, Alexander, Dipl.-Ing. et al
Jöllenbecker Strasse 164
D-4800 Bielefeld 1(DE)

(54) **Arbeitsstrom- oder ruhestrombetätigte Elektromagnet-Kupplung oder -Bremse.**

(57) In einer ringförmigen Ausnehmung (15a) eines Magnetgehäuses (10) einer nicht weiter dargestellten Elektromagnet-Kupplung oder -Bremse ist eine Baueinheit verdrehsicher festgelegt, die aus einer aus einem antimagnetischem Werkstoff hergestellten Stützscheibe (16), damit verdrehsicher verbundenen Polringen (17) sowie konzentrisch zu diesen verlaufend angeordneten und mit der Stützscheibe (16) ebenfalls verdrehsicher verbundenen Reibbelagringen (18) besteht.

Diese einfach aufgebaute und leicht herstellbare Baueinheit bewirkt eine Mehrfach-Durchflutung einer Ankerscheibe (12) sowohl bei arbeits-wie auch ruhestrombetätigten Kupplungen oder Bremsen. Der Magnetfluß ist durch die mit Pfeilen ausgestatteten Linie dargestellt.

Die Ankerscheibe (12) selbst ist jeweils den Polringen (17) gegenüberliegend mit Schlitzen (19) versehen, die jeweils im Sinne eines Luftspaltes wirken und somit mit dazu beitragen, daß die durch die Pfeillinie gekennzeichnete Mehrfach-Durchflutung der Ankerscheibe (12) eintritt.

Fig. 3

## Arbeits-oder ruhestrombetätigte Elektromagnet-Kupplung oder -Bremse

Die vorliegende Erfindung betrifft eine arbeits- oder ruhestrombetätigte Elektromagnet-Kupplung oder -Bremse mit einem Magnetgehäuse und, im Falle einer Kupplung, einem Rotor mit mindestens einem Polring.

Elektromagnet-Kupplungen oder -Bremsen der gattungsgemäßen Art sind an sich bekannt.

Bei arbeitsstrombetätigten Kupplung oder Bremsen ist der Betriebszustand dann gegeben, wenn die Magnetspule des Magnetgehäuses erregt ist, bei ruhestrombetätigten Kupplungen oder Bremsen ist zusätzlich ein Dauermagnet vorhanden, der, solange die Magnetspule nicht erregt ist, den Betriebszustand bewirkt, wird die Magnetspule eingeschaltet, so wirkt diese dem Dauermagneten entgegen und hebt dessen Wirkung auf, so daß dann die Kupplung ausgeschaltet oder die Bremse gelüftet wird.

Man verwendet bei derartigen Kupplungen oder Bremsen einen zusätzlichen Polring, um zu einer mehrfachen magnetischen Durchflutung einer Ankerscheibe und damit zu einer Erhöhung der Kupplungs-oder Bremswirkung zu gelangen.

Bei den bislang bekannten Konstruktionen ist der Polring in einer Verbundmasse eingebettet, die andererseits einen äußeren und einen inneren Ring aus magnetischem Werkstoff miteinander verbindet. Diese gesamte Baueinheit wird dann verdrehsicher mit einem Magnetgehäuse oder einem Rotor verbunden, wobei die durch die Verbundmasse zusammengehaltenen Ringe die äußere und die innere Polfläche des Magnetgehäuses oder des Rotors bilden.

Abgesehen davon, daß der fertigungstechnische Aufwand bei den vorbekannten Konstruktionen nicht unbeträchtlich ist, besteht der funktionelle Nachteil, daß es beim magnetischen Fluß innerhalb des Magnetgehäuses oder des Rotors zu Spaltverlusten kommt, nämlich an den Verbindungsstellen zwischen beiden Ringen und dem Magnetgehäuse oder dem Rotor. Diese Spaltverluste führen zu Drehmomentreduzierungen und Unregelmäßigkeiten der Leistungsdaten, insbesondere bei ruhestrombetätigten Ausführungen.

Der vorliegenden Erfindung liegt die Aufgabe zugrunde, eine Elektromagnet-Kupplung oder -Bremse der gattungsgemäßen Art so zu gestalten, daß die vorstehend beschriebenen Nachteile vermieden werden, d. h., daß die Anbringung mindestens eines Polringes am Magnetgehäuse oder am Rotor fertigungstechnisch vereinfacht wird und daß in funktioneller Hinsicht Spaltverluste vermieden sind.

Diese Aufgabe wird erfindungsgemäß dadurch gelöst, daß der Polring bzw. die Polringe an einer aus einem antimagnetischen Werkstoff bestehenden ringartigen Stützscheibe befestigt ist bzw. sind und das die aus Stütz scheibe und Polring bzw. Polringen bestehende Baueinheit in einer ringförmigen Ausnehmung des Magnetgehäuses oder des Rotors verdrehsicher festgelegt ist.

Durch das Einbringen der fertigungstechnisch äußerst einfach herstellbaren Baueinheit aus Stützscheibe und mindestens einem Polring in eine ringförmige Ausnehmung des Magnetgehäuses oder des Rotors wird funktionell der Vorteil erzielt, daß Spaltverluste beim Magnetfluß nicht auftreten können.

Die äußeren und inneren Ringflächen des Magnetgehäuses oder des Rotors bilden die äußeren und inneren Polflächen, so, wie dies auch bei Elektromagnet-Kupplungen oder -Bremsen ohne Mehrfach-Durchflutung der Fall ist. Lediglich für die Mehrfach-Durchflutung ist mindestens ein zusätzlicher Polring vorgesehen, der mit der Stützscheibe verbunden als Baueinheit mit dem Magnetgehäuse oder dem Rotor verdrehsicher verbunden wird.

Vorteilhafterweise können konzentrisch zum Polring bzw. zu den Polringen vorlaufend Reibbelagringe verdrehsicher mit der Stützscheibe verbunden sein.

Durch die Verwendung derartiger und an sich bekannter Reibbelagringe wird vermieden, daß ausschließlich Metall auf Metall zur Anlage kommt. Außerdem wird durch den höheren Reibungskoeffizienten der Werkstoffpaarung Reibbelag/Metall die Kupplungs-oder Bremswirkung noch zusätzlich erhöht. Weiterhin wird die Lebensdauer erheblich verlängert, außerdem kann durch geeignete Wahl der jeweils verwendeten Reibbeläge eine Anpassung an unterschiedliche Anwendungsfälle durchgeführt werden.

Weitere Merkmale der Erfindung sind Gegenstand von Unteransprüchen.

In den beigefügten Zeichnungen sind Ausführungsbeispiele der Erfindung dargestellt, die im folgenden näher beschrieben werden.

Es zeigen:

Fig. 1 einen Schnitt durch eine Elektromagnet-Kupplung,

Fig. 2 einen schematisch dargestellten Teilschnitt durch ein Magnetgehäuse einer Elektromagnet-Kupplung oder -Bremse,

Fig. 3 einen Teilschnitt durch ein Magnetgehäuse einer Elektromagnet-Kupplung oder -Bremse nebst zugeordneter Ankerscheibe nach einem weiteren Ausführungsbeispiel der Erfindung.

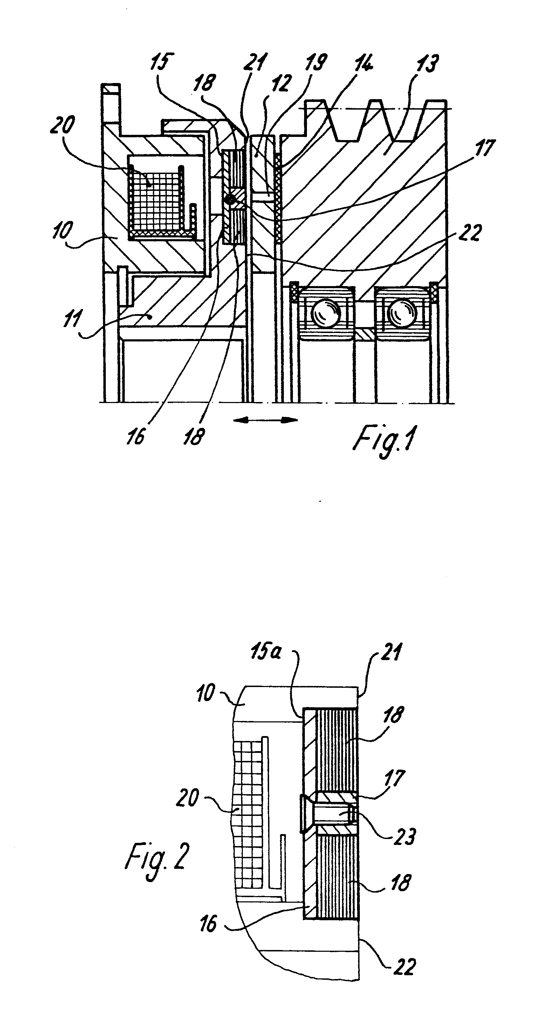

In Figur 1 ist mit dem Bezugszeichen 10 ein ortsfest montierbares Magnetgehäuse einer Elektromagnet-Kupplung bezeichnet. Ein auf einer nicht dargestellten Antriebswelle sowohl axial wie auch verdrehsicher festlegbarer Rotor 11 liegt einer Ankerscheibe 12 axial gegenüber. Die Ankerscheibe 12 ist mit einer Riemenscheibe 13 verdrehsicher, axial aber verschiebbar, verbunden. Als Verbindungsmittel ist eine Federscheibe 14 vorgesehen, die die axiale Bewegung der Ankerscheibe 12 gegenüber der axial und verschiebbar festlegbaren Riemenscheibe 13 ermöglicht.

. Wie Figur 1 deutlich zeigt, ist der Rotor 11 im Bereich einer ringförmigen Ausnehmung 15 mit einer Baueinheit ausgestattet, die aus einer aus einem antimagnetischen Werkstoff bestehenden Stützscheibe 16, einem damit verdrehsicher verbundenen Polring 17 sowie konzentrisch zu diesem angeordneten und ebenfalls mit der Stützscheibe 15 verdrehsicher verbundenen Reibbelagringen 18 besteht.

Diese vorstehend aufgezählte Baueinheit ist verdrehsicher und fest in der Ausnehmung 15 des Rotors 11 festgelegt.

Wie Figur 1 weiterhin deutlich macht, ist die Ankerscheibe 12 in den dem Polring 17 gegenüberliegenden Bereich mit einem durch einen Schlitz 19 gebildeten Luftspalt versehen.

Die vorstehend beschriebene Konstruktion bewirkt nun eine Mehrfach-Durchflutung der Ankerscheibe 12 bei Erregung der im Magnetgehäuse 10 angeordneten Spule 20. Es findet einerseits eine Durchflutung im Bereich der äußeren und inneren Polflächen 21 und 22 des Rotors 11 wie auch eine Durchflutung im Bereich des Polringes 17 statt. Durch diese Mehrfach-Durchflutung wird die Wirkung der Kupplung einfacher Art und Weise erhöht, so daß ein vergleichsweise hohes Drehmoment übertragen werden kann.

Die zur Erzielung dieses Vorteiles notwendigen Maßnahmen sind vergleichsweise gering, da lediglich die aus Stützscheibe 16, Polring 17 und Reibbelagringen 18 bestehende Baueinheit hergestellt und in die ringförmige Ausnehmung 15 des Rotors eingebracht werden muß.

In Figur 2 ist angedeutet, daß eine derartige Baueinheit auch in einer ringförmigen Ausnehmung 15a eines Magnetgehäuses 10 eingebracht werden kann.

Auch hier wird auf einfache Art und Weise eine Mehrfach-Durchflutung einer in Figur 2 nicht dargestellten Ankerscheibe ermöglicht, wobei die äußeren und inneren Polflächen 21 und 22 wiederum diejenigen Ringflächen sind, welche die Ausnehmung 15a begrenzen.

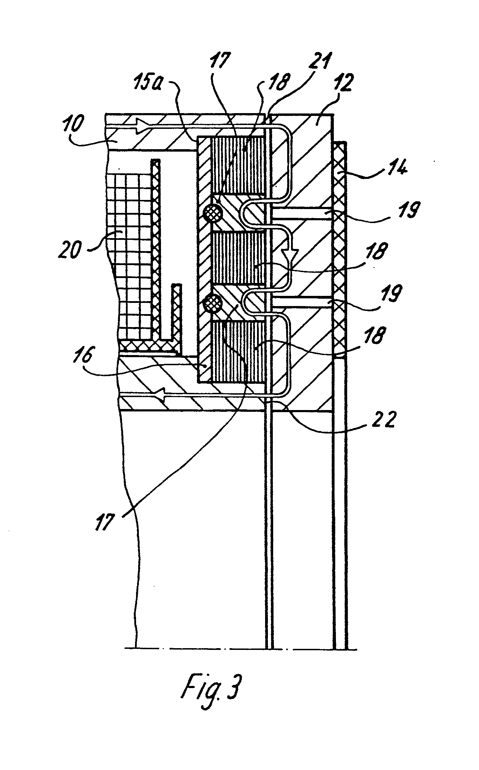

Figur 3 macht deutlich, daß an einer Stützscheibe 16 ohne weiteres auch mehrere Polringe 17 befestigt werden können, so daß sich eine noch häufigere Durchflutung der Anker scheibe 12 einer Elektromagnet-Kupplung oder -Bremse ergibt. In Figur 3 ist der Magnetfluß durch die besonders hervorgehobenen und mit Pfeilen versehenen Linie deutlich gemacht. Es wird deutlich, daß sich beim Ausführungsbeispiel gemäß Figur 3 eine dreifache Durchflutung der Ankerscheibe 12 ergibt, sobald die Spule 20 des Magnetgehäuses 10 erregt ist.

Die Polringe 17 können, wie Figur 2 dies zeigt, beispielsweise durch Schrauben 23 mit der Stützscheibe 16 verbunden sein, es besteht aber ebenso die Mögichkeit,die Polringe 17 mit der Stützscheibe 16 zu vernieten.

Die Reibbelagringe 18 sind zweckmäßigerweise mit der Stützscheibe 16 verklebt.

Bezugszeichen

     10 Magnetgehäuse
     11 Rotor
     12 Ankerscheibe
     13 Riemenscheibe
     14 Federscheibe
     15 Ausnehmung
     15a Ausnehmung
     16 Stützscheibe
     17 Polring
     18 Reibbelagring
     19 Schlitz
     20 Spule
     21 innere Polfläche
     22 äußere Polfläche
     23 Schrauben

**Ansprüche**

1. Arbeitsstrom-oder ruhestrombetätigte Elektromagnet-Kupplung oder -Bremse mit einem Magnetgehäuse und, im Falle einer Kupplung, einem Rotor mit mindestens einem Polring, **dadurch gekennzeichnet,** daß der Polring (17) bzw. die Polringe (17) an einer aus einem antimagnetischem Werkstoff bestehenden ringartigen Stützscheibe (16) befestigt ist bzw. sind und das die aus Stützscheibe (16) und Polring (17) bzw. Polringen (17) bestehende Baueinheit in einer ringförmigen Ausnehmung (15,15a) des Magnetgehäuses (10) oder des Rotors (11) verdrehsicher festgelegt ist.

2. Elektromagnet-Kupplung oder -Bremse nach Anspruch 1, dadurch gekennzeichnet, daß konzentrisch zum Polring (17) bzw. zu den Polringen (17) verlaufend Reibbelagringe (18) verdrehsicher mit der Stützscheibe (16) verbunden sind.

3. Elektromagnet-Kupplung oder -Bremse nach Anspruch 2, dadurch gekennzeichnet, daß die Reibbelagringe (18) mit der Stützscheibe (16) verklebt sind.

4. Elektromagnet-Kupplung oder -Bremse nach einem oder mehreren der vorhergehenden Ansprüche, dadurch gekennzeichnet, daß der Polring (17) bzw. die Polringe (17) mit der Stützscheibe - (16) durch Schrauben (23) oder durch Vernietung verbunden ist bzw. sind.

Fig.1

Fig.2

Fig. 3

**Europäisches**
**Patentamt**

**EUROPÄISCHER RECHERCHENBERICHT**

Nummer der Anmeldung

EP 85 11 1321

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 465 862 (BIRDSALL) <br> * Spalten 2,3; Figur 1 * <br><br> --- | 1 | F 16 D 27/10 <br> F 16 D 27/06 <br> F 16 D 59/02 <br> F 16 D 63/00 |
| X | US-A-2 860 403 (MEYER) <br> * Insgesamt * <br><br> --- | 1,2 | |
| X | GB-A-2 017 232 (HITACHI LTD.) <br> * Insgesamt * <br><br> --- | 1 | |
| A | GB-A- 726 487 (WARNER ELECTRIC) <br> * Insgesamt * <br><br> --- | 2,3 | |
| A | US-A-4 471 860 (YAMADA) <br> * Spalte 3, Zeilen 43-47; Figur 3a * <br><br> --- | 4 | RECHERCHIERTE SACHGEBIETE (Int. Cl.4) |
| A | DE-C- 833 747 (CITROEN) <br><br> ----- | | F 16 D 27/00 <br> F 16 D 29/00 <br> F 16 D 63/00 <br> F 16 D 59/00 |

Der vorliegende Recherchenbericht wurde für alle Patentansprüche erstellt.

| Recherchenort <br> DEN HAAG | Abschlußdatum der Recherche <br> 14-04-1986 | Prüfer <br> BALDWIN D.R. |
|---|---|---|